(19) Europäisches Patentamt
European Patent Office
Office européen des brevets

(11) **EP 1 366 889 A2**

(12) **EUROPEAN PATENT APPLICATION**

(43) Date of publication:
**03.12.2003 Bulletin 2003/49**

(51) Int Cl.[7]: **B29C 63/02**, B29D 31/00,
B05C 17/02

(21) Application number: **03009830.5**

(22) Date of filing: **13.05.2003**

(84) Designated Contracting States:
**AT BE BG CH CY CZ DE DK EE ES FI FR GB GR
HU IE IT LI LU MC NL PT RO SE SI SK TR**
Designated Extension States:
**AL LT LV MK**

(30) Priority: **16.05.2002 JP 2002140900
19.08.2002 JP 2002237863**

(71) Applicant: **Kuraray Co., Ltd.
Okayama-Pref. (JP)**

(72) Inventor: **Yamaguchi, Tosirou c/o Kuraray Co., Ltd
Osaka-City, Osaka Pref. (JP)**

(74) Representative: **VOSSIUS & PARTNER
Siebertstrasse 4
81675 München (DE)**

(54) **Roller brush structure for painting, and method for producing it**

(57) The roller brush is fabricated by covering a paint-impervious roll core (2) with a paint holder of a fibrous circular material that contains conjugate fibers comprising a high-melting-point polymer component (A) and a low-melting-point polymer component (B). In this, the fibrous circular material contains thermal-fusing conjugate fibers and at least a part of the fibers are fused to form a porous structure.

Fig. 1:

(a)

High-Melting-Point Polymer A

Low-Melting-Point Polymer B

(b)

High-Melting-Point Polymer A

Low-Melting-Point Polymer B

(c)

High-Melting-Point Polymer A

Low-Melting-Point Polymer B

**Description**

The present invention relates to a roller brush for painting, precisely to a roller brush structure for painting. When a paint holder is, while being bonded thereto, wound around the periphery of a paint-impervious cylindrical roll core in a process of fabricating the roller brush, failed winding operation is reduced. Thus fabricated, the roller brush well absorbs even an aqueous paint of low viscosity and holds it (good paint holdability) and readily releases it (good paint releasability), and can form a uniform painted face with no bubble spots remaining thereon.

DESCRIPTION OF THE RELATED ART

Heretofore, roller brushes for painting are fabricated by spirally winding and bonding a strip of fur or synthetic fiber pile yarn-planted, woven or knitted shaggy fabric to a plastic or wooden, paint-impervious roll core. One problem with the roller brushes that are fabricated according to the method is that the seams of the brush face-constituting base fabric are remarkably seen and, in particular, when the winding seams form gaps, the painted face will have defects of streaks that are result from the traces of the seams on the brush face. Another problem is that the fabric is peeled from the roller core by solvent and yarns may drop off from the brush. In such cases, the products are not good and could not be commercialized.

To solve these problems, JP-UM-A 52-21153 discloses a roller brush for painting, which is fabricated by covering a roller substrate with a plain circular knitted fabric. This is seamless and is free from the problem with the conventional production process where a fabric strip is spirally wound around a roller core. They say that the face painted by the use of the roller brush is free from the problem of unevenness to be caused by the seams on ordinary roller brushes.

JP-UM-A 53-22609 discloses a seamless roller that is fabricated by covering a core cylinder formed of metal or any other material with a plain knitted pile fabric. They say that the production costs of the roller are low.

On the other hand, JP-UM-A 5-74679 discloses use of ultrafine fibers for pile yarns for enabling uniform painting with no brushing-like hair traces on the painted face. JP-A 11-19573 discloses preparing a seamless circular fabric of loop-wise woven ultrafine fibers, covering an absorbent pad with it, and using it in painting.

However, the roller brushes mentioned above, which are fabricated by merely covering a core with a seamless circular knitted material are still defective in that the knitting stitches are transferred onto the painted face. In addition, even when the fibers are made to rise up like piles, the piles formed on knitted fabrics have an orientation behavior intrinsic thereto. Therefore, when a core is covered with the piled fabric, the piles shall fall down in any oriented direction relative to the direction of the length of the core. This is a problem in that the orientation direction of the piles of the piled fabric does not always correspond to the forward and backward rotation direction of the core. Contrary to this, in the other conventional method of spirally winding a piled fabric around a core cylinder, the orientation of the piled part may correspond to the rotation direction of the core roller or to the reverse rotation direction thereof. Therefore, in view of the practicability thereof, the painting roller fabricated by the process of spirally winding a fabric around a core cylinder is far better for painting operation with it.

In fabricating painting roller brushes, it may be considered that, when a roller core is covered with sleeve-form knitted fabric so as to fabricate a seamless roller as in the related art references mentioned above, and when the base yarn is tightly adhered to the core roller while it is shrunk so as to enhance the fabric adhesion to the core, and further when the pile yarn is specifically processed to have good paint retentiveness and, in addition, the pile yarn is formed of ultrafine fibers, then any one may expect that a painting roller that ensures uniform painting could be obtained. However, the viscosity of paint to be worked by the use of paint roller widely varies from low to high. Therefore, even though a paint roller has good paint holdability, if its paint releasability is not good, it should not be a good paint roller. Specifically, a matter of importance for roller brushes for painting is a good balance of paint holdability and paint releasability, and roller brushes capable of releasing a constant amount of paint under a constant pressure are desired.

In finish painting, in particular, it is desired that the painted face is finished beautifully, and a short-hair roller of which the piles around it are cut short is used for such finish painting. The roller is specifically so designed that the deformation of its piles is reduced and the piles are kept uniform. In it, however, even when ultrafine fibers are used for the piles, they are still unsatisfactory.

Intending to further improve the appearance of finished painting, I, the present inventor have already found that, in a fibrous structure fabricated by forming, on one surface of a base fabric such as a woven or knitted fabric, a rising fiber layer (pile layer) that contains a predetermined ratio of thermal-fusing crimped fibers having a crimp elongation o fall within a predetermined range, when a porous skin layer is formed in the surface part of the rising fiber layer by fusing the crimped fibers to give pores pervious to paint, then the resulting fibrous structure has good capability favorable for painting and the appearance of finished panting with it is extremely good, as in JP-A 2002-302863. However, when paint rollers are fabricated in conventional methods, the problem with them caused by the seams of the roller covers could not be still solved.

The present invention has been made in that situation, and it is to provide an inexpensive high-quality roller brush for painting. Concretely, the roller brush is fabricated by covering a seamless, paint-impervious roll core directly with a fibrous circular material having a specific structure, more preferably followed by forming a skin layer as the outermost layer of the fibrous circular material. Thus designed, the roller brush has a good balance of paint holdability and paint releasability. In addition, overcoming the problem of non-homogeneousness of the brush surface thereof, the roller brush is expected to attain further improvement in the quality of the top face finish-painted by the use of it.

Specifically, the invention provides a roller brush for painting which is fabricated by covering a roll core with a paint holder of a fibrous circular material that contains thermal-fusing conjugate fibers comprising a high-melting-point polymer component A and a low-melting-point polymer component B, and in which at least a part of the thermal-fusing conjugate fibers to constitute the fibrous circular material are fused to form a porous structure. Preferably, in the roller brush for painting, a network-structured skin layer formed through thermal fusion of the low-melting-point polymer component of the thermal-fusing conjugate fibers is in the outermost surface of the fibrous circular material. More preferably, in the roller brush for painting, at least one component of The low-melting-point polymer component B to form the fibers is an ethylene-vinyl alcohol copolymer. More preferably, in the roller brush for painting, the water retention of the fibrous circular material is at least 3 times the mass of the fibrous circular material.

One preferred method for producing the roller brush for painting of the invention comprises knitting chenille yarns that contain thermal-fusing conjugate fibers and have effect yarns having a height of at least 1.5 mm from the core yarns, into a circular knitted fabric of which the periphery is longer than the body periphery of the roll core, covering the roll core with the knitted fabric, then processing it under dry heat or wet heat to thereby shrink the thermal-fusing conjugate fibers and partly fuse the fibers with an adhesive component so that the knitted fabric is tightly fixed around the roll core.

BRIEF DESCRIPTION OF THE DRAWINGS

Fig. 1A to Fig. 1C are cross-sectional views of conjugate fibers usable for effect yarns for chenille yarns that are used in producing the roller brush for painting of the invention.
Fig. 2 is a schematic view showing the surface of a roller brush for painting, which is fabricated by covering a core with a knitted fabric according to related art technology.
Fig. 3 is a schematic view showing the surface of a roller brush for painting, which is fabricated by covering a core with a knitted fabric with piles, according to related art technology.
Fig. 4 is a schematic view showing a circular material obtained by directly covering a core with a knitted fabric.
Fig. 5 is a schematic view showing a roller brush for painting of the invention, which is before heat treatment.
Fig. 6 is a schematic view showing the surface of a roller brush for painting of the invention, for which the fibrous circular material of the roller brush for painting of Fig. 5 was subjected to heat treatment.
Fig. 7 is a schematic cross-sectional view of a roller brush for painting of the invention, which was cut in the direction parallel to the length direction of the core of the brush.
Fig. 8 is a side view showing the structure of a chenille yarn that constitutes a roller brush for painting of the invention.
Fig. 9 is a microscopic photograph showing the cross-sectional structure of a roller brush for painting of the invention.
Fig. 10 is a microscopic photograph showing the surface structure of a roller brush for painting of the invention.

In these drawings, 1 is a needle loop, 2 is a core, 3 is a pile yarn, 4 is a sinker loop, 5 is a chenille yarn, 6 is an effect yarn, 7 is a fused point, 8 is a rough porous layer, 9 is a layer of continuous chenille core yarns, 10 is a dense porous layer, 11 is a chenille core yarn, 12 is a skin layer.

DESCRIPTION OF THE PREFERRED EMBODIMENTS

The roller brush for painting of the invention is characterized in that its paint support is a fibrous circular material that contains thermal-fusing conjugate fibers. Having the fibrous circular material, the roller brush can fully absorb paint. If, however, the fibrous circular material does not contain thermal-fusing conjugate fibers, it could hot form a porous structure and its paint holdability greatly lowers. This is remarkable when the solvent viscosity is extremely low like in photocatalyst-type paint.

In the roller brush for painting of the invention, it is important to use a fibrous circular material which comprises conjugate fibers composed of a high-melting-point polymer component A and a low-melting-point component B and in which at least a part of the low-melting-point polymer component B is fused to form a porous structure. Using the fibrous circular material of the type in the brush significantly improves the appearance of the face painted by the use of the brush. More preferably, a skin layer is formed in the outermost surface of the fibrous circular material whereby the appearance of the painted face is more bettered.

In the conjugate fibers for use in the invention, the melting point difference between the high-melting-point polymer component A and the low-melting-point polymer component B is preferably at least 40°C. If the melting point difference between the high-melting-point polymer component A and the low-melting-point polymer component B is smaller than 40°C, not only the low-melting-point polymer component B but also the high-melting-point polymer component A will be softened and fused during heat-treatment in the post-treatment step. Needless-to-say, it the melting point difference is too large, it causes a problem in that conjugate melt spinning into fibers is impossible. In practice, the melting point difference is preferably at most 180°C.

In the present invention, melting point of the high-melting-point polymer component A preferably range from 180°C to 300°C and melting point of the low-melting-point polymer component B preferably range from 130°C to 190°C.

The high-melting-point polymer A, one component to constitute the conjugate fibers for use in the invention includes polyolefin polymers, polyester polymers and polyamide polymers, but polyesters are preferred in view of their crimpability. The polyesters may be fiber-forming polyesters formed of aromatic dicarboxylic acids such as terephthalic acid, isophthalic acid, naphthalene-2,6-dicarboxylic acid, phthalic acid, α,β-(4-carboxyphenoxy)ethane, 4,4-dicarboxydiphenyl-5-sodium-sulfoisophthalic acid; aliphatic dicarboxylic acids such as azelaic acid, adipic acid, sebacic acid, or their esters; and diols such as ethylene glycol, diethylene glycol, 1,3-propanediol, 1,4-butanediol, 1,6-hexanediol, neopentyl glycol, cyclohexane-1,4-dimethanol, polyethylene glycol, polytetramethylene glycol. Preferably, at least 80 mol% of the constitutive units of the polymers are polyethylene terephthalate units.

On the other hand, the low-melting-point polymer B usable for the conjugate fibers in the invention includes polyolefin polymers, polyester polymers, polyamide polymers and polyvinyl alcohol polymers, but polyvinyl alcohol polymers are preferred as wet heat treatment to attain homogeneous heat treatment may be utilized for them. In addition, the component must be resistant to organic solvent, and, when the essential ingredient of the solvent is water like in photocatalyst-type paint, the component must have an affinity for water. Therefore, ethylene-vinyl alcohol copolymers are preferred for the component. Ethylene-vinyl alcohol copolymers are those prepared by copolymerizing polyvinyl alcohol with from 10 mol% to 60 mol% of ethylene residues. In particular, those copolymerized with from 30 mol% to 50 mol% of ethylene residues are preferred as their wet heat adhesiveness is good. Also preferably, the vinyl alcohol moiety has a degree of saponification of at least 95 mol%.

In the conjugate fibers composed of the low-melting-point polymer B combined the high-melting-point polymer A in which the polymer B is a ethylene-vinyl alcohol copolymer preferred for it, the conjugate ratio of the ethylene-vinyl alcohol copolymer is preferably from 10 to 90 % by mass, more preferably from 30 to 70 % by mass in view of the spinnability of the fibers. Specific examples of the conjugate fibers are core/sheath fibers in which the high-melting-point polymer A forms a core component and the low-melting-point polymer B forms a sheath component; sea/island fibers in which the high-melting-point polymer A forms an island component and the low-melting-point polymer B forms a sea component; and split fibers in which the high-melting-point polymer A and the low-melting-point polymer B forms a multi-layered bonded structure. Above all, split fibers are preferred since the skin layer may be densified, and therefore, the roller brush is favorable for painting with photocatalyst-type paint.

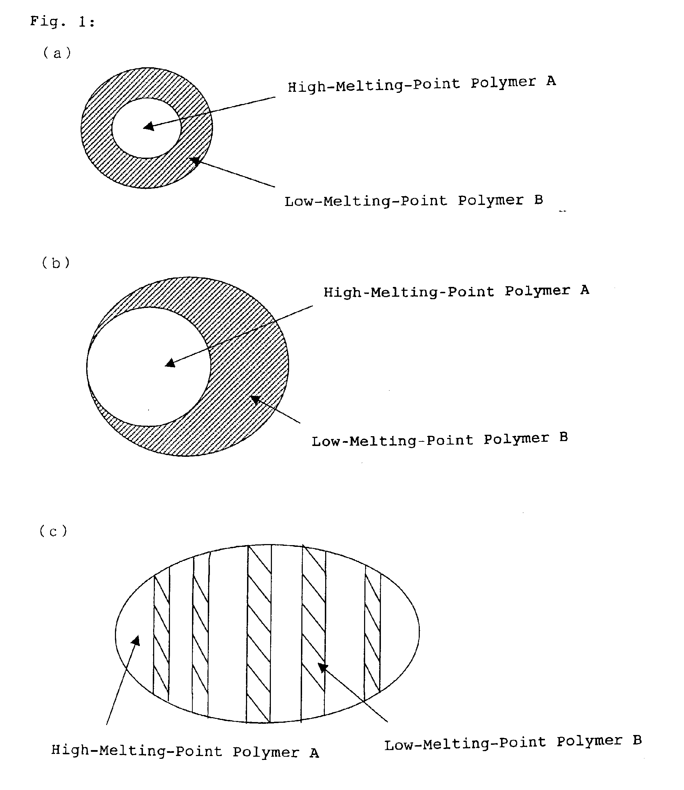

Fig. 1A to Fig. 1C show some examples of conjugate fibers of different cross sections that are usable in the invention. Fig. 1A is a cross section of a core/sheath conjugate fiber, in which the sheath component is formed of a low-melting-point polymer B. Fig. 1B is a cross section of a side-by-side conjugate fiber, in which a high-melting-point polymer A and a low-melting-point polymer B are bonded to each other. Fig. 1C is a cross section of a split conjugate fiber, in which a high-melting-point polymer A and a low-melting-point polymer B are alternately bonded to each other.

The fibrous circular material that constitutes the roller brush for painting of the invention contains the above-mentioned thermal-fusing conjugate fibers, and the content of the fibers therein is preferably at least 50 % by mass. Not interfering with the effect of the invention, the fibrous circular material may contain any other fibers. The fibers except the thermal-fusing conjugate fibers to constitute the fibrous circular material for use in the invention are not specifically defined, and may be any of natural fibers, semi-synthetic fibers and synthetic fibers. These may be selected in any desired manner in accordance with the object of the roller brush.

The roller brush for painting of the invention is a structure fabricated by covering a paint-impervious roll core with the fibrous circular material. Heretofore, it is said that the face of the painting brush preferably has cut piles. For this, in general, an ordinary woven or knitted base fabric is cut at its loops, or is raised. However, the cutting or raising process is unfavorable since the frequency of scratching the base fabric increases. Another problem with it is that the piles formed in the woven or knitted texture are oriented in some direction, as so mentioned hereinabove, and the piled fabric is unfavorable for roller brushes. Apart from the fabric with cut piles, a fabric with pile loops rising from its base texture may also be taken into consideration for use in roller brushes, but this is problematic in that the roller brushes comprising it scatter paint. Given that situation, the present invention has solved the above-mentioned problems by using chenille yarns for woven or knitted fabrics for roller brushes.

The chenille yarns for use in the invention may be prepared, for example, as follows: Multiple core yarns (some of which may be thermal-fusing fibers for bonding effect yarns) are fed into a chenille twister, effect yarns are wound around them, and thereafter they are twisted into chenille yarns while the effect yarns wound around them are cut with a cutter. In case where thermal-fusing fibers are used therein, the chenille yarns formed in the manner as above are heated at a temperature at which the thermal-fusing fibers therein fuse, and the effect yarns are bonded and fixed to the core yarns. In the thus-produced chenille yarns, the effect yarns do not drop from the core yarns. In the invention, however, the chenille yarns are not limited to those produced according to these methods described herein. Apart from these, for example, the chenille yarns may be produced in a raschel net making method or in a tricot making method. Though not specifically defined, a chenille yarn twister in which the density of the effect yarns to be around chenille yarns can be high is preferably used in the method of producing the chenille yarns for use in the invention.

In the chenille yarns, the height of the effect yarn from the core yarn is preferably at least 1.5 mm. If the height of the effect yarn from the core yarn is smaller than 1.5 mm, it is unfavorable since the paint holdability of the fibrous circular material will lower. On the other hand, from the inventor's knowledge, if the height of the effect yarn from the core yarn is larger than 6 mm, the weavability of the fabric will significantly worsen even though the weaving condition is varied and, in addition, the skin layer mentioned hereinafter is difficult to form on the fabric. Accordingly, the length of the effect yarn is preferably from 1.5 to 6.0 mm, more preferably from 2.0 to 3.0 mm.

The chenille yarns mentioned above are knitted into a circular knitted fabric having a predetermined size, using, for example, a 10-gauge circular knitting machine having an aperture of 2 inches. Even though the same circular knitting machine is used, the size of the circular knitted fabric may be varied in some degree by controlling the knitting density. In addition, the outward appearance condition of the cut piles of the fabric may also be controlled to the best. Thus obtained, the circular fabric may be directly covered over a paint-impervious core. Preferably, however, it is turned inside out, and then it is covered over the core. Thus constructed, the roller brush is influenced little by the loop face (sinker loop) of the knitted fabric, and therefore the objects painted by the use of it can be finished better.

Next, in case where a skin layer is not formed on the surface of the roller brush, the cover material obtained in the above is subjected to heat treatment at a temperature at which the thermal-fusing component therein may fuse, with no local pressure being applied to the surface of the cover material, to thereby form a porous structure in the thus-processed cover material. On the other hand, when a skin layer is formed on the surface of the roller brush, the surface of the roller brush is subjected to heat treatment, for example, by keeping it in contact with a hot plate heated at a temperature not lower than the melting point of the brush surface, and then it is optionally dewatered and dried. The process gives the roller brush for painting of the invention.

The heat treatment may be effected under any of dry heat or wet heat, but dry heat treatment is preferred as its process may be simplified. The temperature in the dry heat treatment is preferably in the range of from 160 to 200°C; and that in the wet heat treatment is preferably in the range of from 90 to 130°C.

Preferably, the roller brush for painting of the invention has a skin layer formed on its surface. For example, the circular material obtained according to the method mentioned above is covered over a paint-impervious roller core to finish a roller body, and then its surface is kept in contact with a hot plate heated at a temperature not lower than the melting point of the low-melting-point polymer B, one component of the conjugate fibers to constitute the circular material, to thereby form a skin layer thereon. The process gives the roller brush of the invention having a skin layer formed thereon. The skin layer of the painting roller brush thus fabricated in the manner as above has a network-structured matrix therein, which has been formed through mutual fusion of the low-melting-point polymer of the conjugate fibers and which runs from the surface toward the inside of the layer. The pore size of the network structure of the matrix is approximately from 0.1 to 0.5 mm; and the thickness of the skin layer is approximately from 50 to 300 μm. A film that interferes with air permeation in the direction of the thickness thereof, such as a closed foam urethane layer does not exist on the surface of the roller brush. Below the skin layer, formed is a rough matrix in which the degree of mutual fusion of the low-melting point polymer of the conjugate fibers is low. Further below the rough matrix layer, there exists a support layer formed of the core yarns of chenille yarns . Still further below the support layer, there exist a matrix of entangled effect yarns of chenille yarns that are in direct contact with the surface of the paint-impervious roll core.

As described hereinabove, in the roller brush for painting of the invention, at least a part of the low-melting-point polymer component B of the thermal-fusing conjugate fibers that constitute the fibrous circular material serving as a paint holder is fused to form a porous structure; a skin layer is preferably formed on the surface of the roller brush for painting; and a layer of lower freedom is below the skin layer. Accordingly, when the roller brush contains a paint and when the paint is transferred onto the face of an object by the use of the roller brush, a good paint may be formed with no bubbles therein. However, for example, the surface of a conventional finish-painting short-hair roller is finished to have a cut pile with high freedom. Therefore, even though the hairs of the cut pile are short, they could not always receive a constant deformation stress. Contrary to this, the roller brush for painting of the invention has a porous structure formed in the fibrous circular material that serves as a paint holder, and more preferably, the outermost layer of the roller brush has a dense matrix structure formed through polymer fusion. Accordingly, the roller brush of the invention deforms little while used in painting. With it, the paint is extruded out through the small pores that are formed in the skin layer and have an extremely low degree of freedom or deform little in size, and transferred onto the surface of an object. Another advantage of the roller brush of the invention is that few bubbles remain on the coated face. This will be because, in the roller brush for painting of the invention, paint is held in the layer of low freedom that underlies the skin layer, and when the layer is filled with paint, it almost completely purges air to give no bubbles on the painted face.

Preferably, the water absorption of the fibrous circular material to constitute the roller brush of the invention is at least 3 times the mass of the fibrous circular material for ensuring good painting operation with the roller brush. If the water absorption is less than 3 times, the area that may be painted in one operation will greatly lower, and the operability with the roller brush will be poor. However, if the water absorption is too high, much paint will be released from the brush surface all at a time, therefore causing a trouble of liquid dropping. The retention of the paint that has been absorbed by the roller brush must be attained in the space between the neighboring fibers. Therefore, it is unfavorable to select fibers that may be swollen by the paint solvent, for the roller brush of the invention. Accordingly, the water absorption of the roller brush for painting of the invention is more preferably from 3.5 to 5.5 times from the viewpoint of the balance between the paint holdability and the paint releasability of the roller brush.

As in the above, the excellent advantage of the roller brush for painting of the invention is that it gives no bubbles to the painted face and is free from the problem that has heretofore been troublesome in conventional painting. The roller brush for painting of the invention is described in more detail with reference to the drawings attached hereto.

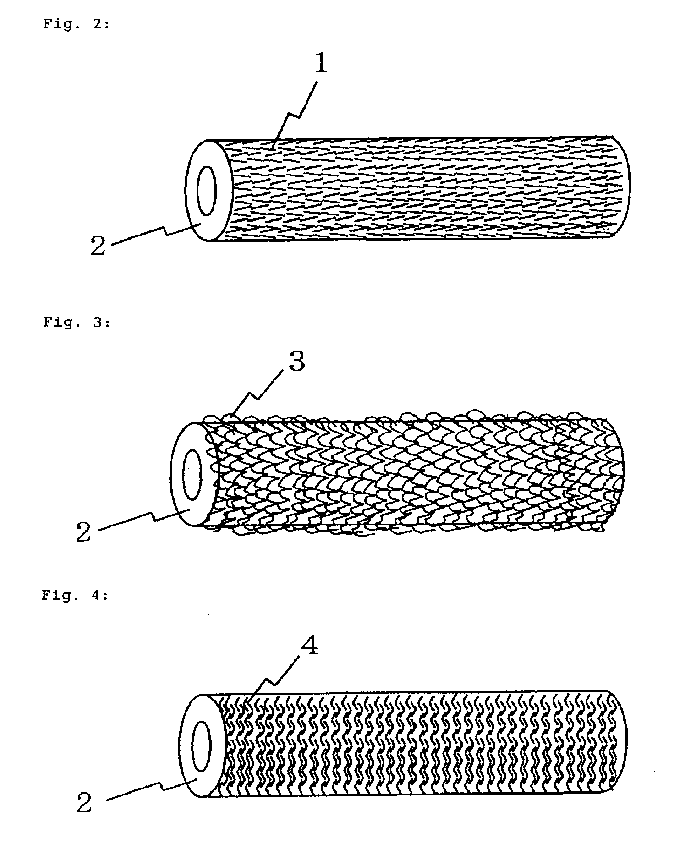

Fig. 2 is a schematic view showing the surface of a roller brush for painting, which is fabricated by covering a core with a knitted fabric according to related-art technology. In this, the needle loops 1 are knitted to be perpendicular to the length direction of the core 2.

Fig. 3 is a schematic view showing the surface of a roller brush for painting, which is fabricated by covering a core with a knitted fabric with piles according to related-art technology. In this, the piled yarns 3 are inclined relative to the length direction of the core 2.

Fig. 4 is a schematic view showing the basic technical idea of the invention, in which the core is directly covered with a circular material of a knitted fabric. As in this, it is understood that the sinker loops 4 run in the same direction as the rotary direction of the core 2.

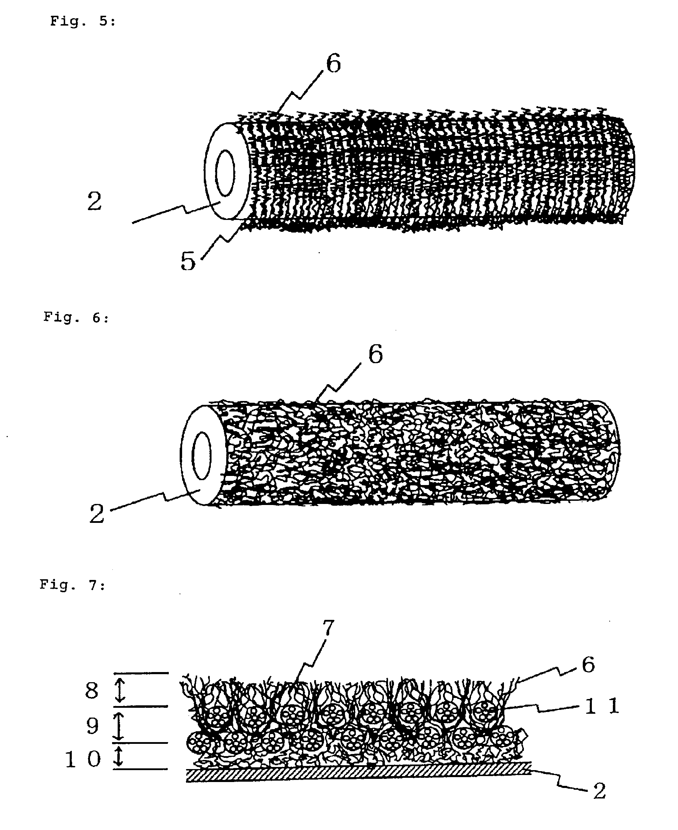

Fig. 5 is a schematic view showing the roller brush for painting of the invention, which is before heat treatment. In this, the chenille yarns 5 are oriented in the same direction as in Fig. 4, and the effect yarns 6 rise perpendicularly from the surface of the core.

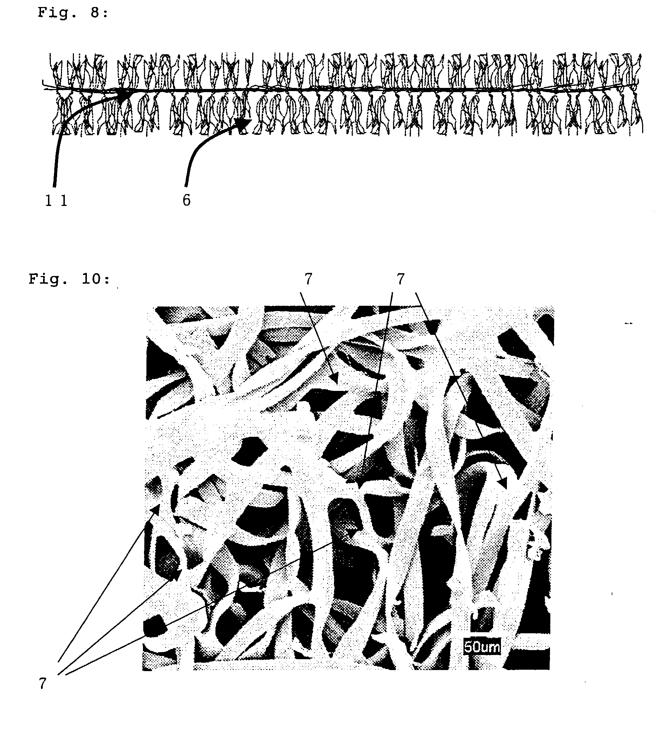

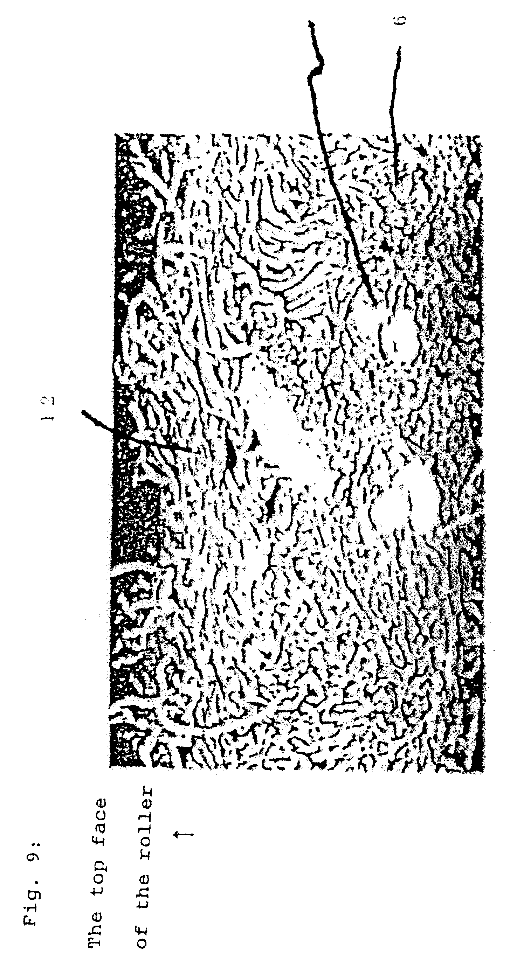

Fig. 6 is a schematic view showing the surface of the roller brush for painting of the invention, for which the roller brush of Fig. 5 is subjected to heat treatment to complete the fibrous circular material. In this, the effect yarns 6 are crimped and shrank after heat treatment, and the surface appearance of the knitted fabric of the roller brush is microscopically seen crimped.

Fig. 7 is a schematic cross-sectional view of the roller brush for painting of the invention not having a skin layer on its surface. To show it, the roller brush was cut in the direction parallel to the length direction of the its core. As illustrated, the circular material comprises a porous layer 8 of low density; a layer 9 formed of continuous chenille core yarns; and a dense porous layer 10. The porous layer 8 of low density will be formed because of the following reasons: As compared with the outer effect yarns 6, the inner ornamental yarns 6 that are contacted with the core 2 will receive a strong compression form through heat treatment, and therefore the fibers constituting them are bound to have a high density, and in addition, the thermal-fusing conjugate fibers in the effect yarns 6 will be fused to form a large number of fused points 7. On the other hand, the effect yarns 6 on the outer side will also shrink, but their freedom is still high. Therefore, though the fibers are fused together in some degree, the fused points 7 exist only sparsely. In case where the chenille core yarns 11 are formed of thermal-fusing fibers, the fused fiber bundles will be tough and will be cured to such a degree that the filaments could not be separately from each other.

The roller brush of the invention will function as follows: The porous layer in the fibrous circular material of the rubber brush participates in the paint holdability and the paint releasability of the brush, and the fibrous porous layer 10 of high density will serve essentially for holding paint therein. When the brush is pressed in painting operation, the paint held therein moves toward the rough, fibrous porous layer 8 and then jets out toward a face to be painted with it. Some paint will contain a solvent of extremely low viscosity, for example, like in photocatalyst-type paint. In the invention, when an ethylene-vinyl alcohol copolymer is used for the thermal-fusing fibers, then the roller brush ensures extremely good paint retention and paint release, and this is extremely favorable for such photocatalyst-type paint.

Fig. 8 shows the structure of the chenille yarn for use in the roller brush for painting of the invention. As illustrated, effect yarns 6 rise like fluff, perpendicularly to the chenille core yarn 11. On the drawing, the effect yarns are seen to be all in the same plane, but when the chenille yarns are formed into a circular fabric, they are reeled, twisted and then knitted into it.

Fig. 9 is an electromicroscopic photograph showing the cross-section structure of the roller brush for painting of the invention, in which a skin layer has been formed on the brush surface. In Fig. 9, the top face of the roller brush is a skin layer 12. In the skin layer 12, the effect yarns 6 are relatively densely deposited to be around the chenille core yarns 11. Regarding its surface appearance, the skin layer 12 obviously has a smooth feel. On the drawing, the skin layer 12 has a thickness of about 100 μ.

Fig. 10 is an electromicroscopic photograph showing the surface structure of the roller brush for painting of the invention. As illustrated, it is understood that there exist a large number of fused points 7 that are formed through mutual fusion of the low-melting-point polymer of the conjugate fibers to constitute the effect yarns 6, and these forms a matrix layer of the surface structure.

The roller brush for painting of the invention is fabricated by covering a paint-impervious roll core with a paint holder of a fibrous circular material that contains conjugate fibers formed of a high-melting-point polymer component A and a low-melting-point polymer component B, and its advantages are that, when the paint holder is wound and bonded to the periphery of the paint-impervious roll core body in fabricating the roller brush, the bonding failure is reduced and, in addition, even when an aqueous paint of low viscosity is used for painting with the roller brush, the paint holdability and the paint releasability of the roller brush are both good. Accordingly, the roller brush makes it possible to form a uniformly painted face with no bubbles remaining in the paint layer. The roller brush is usable for various applications, for example, for interior and exterior painting of buildings, etc.

EXAMPLES

The invention is described in more detail with reference to the following Examples, to which, however, the invention is not limited. In the following Examples, the degree of crimp elongation of the fibers (yarns) that constitute the fibrous circular material, and the appearance of the object face painted and finished with the roller brush for painting were measured and evaluated according to the methods mentioned below. Crimp elongation of fibers (yarns) that constitute fibrous circular material:

Using a reeler, the yarn to be tested was reeled up to be a hank of 5500 dtex, and a weight of 10 g was hung at the center of the bottom of the hank. With that, the hank was fixed at its top and heated at 90°C for 30 minutes while a load of 0.009 cN/dtex was applied thereto.

Next, this was left at room temperature and dried with no load applied thereto. Then, a load of 10 g was again applied to it and left as such for 5 minutes, and thereafter the length of the yarn was measured. This is represented by L1 (mm). Next, a load of 1 kg was applied to it and left as such for 30 seconds, and then the length of the yarn was measured. This is represented by L2 (mm). According to the following equation (I) , the crimp elongation of the yarn was obtained.

$$\text{Crimp elongation (\%)} = \{(L2 - L1)/L2\} \times 100 \qquad (I)$$

Water retention of fibrous circular material:

The fibrous circular material to be tested was cut into test pieces having a predetermined dimension (length 10 cm). The dry weight of each test piece was measured, and this is represented by $W_1$ (g). Next, the test pieces were dipped in water, left as such for 3 minutes, and then taken out. The weight of each test piece was measured, and this is represented by $W_2$ (g) . The water retention of the sample was measured according to the following equation (II):

$$\text{Water retention (times that of dry sample)} = W_2/W_1 \qquad (II)$$

Finished appearance of coated face:

The roller brush to be tested was run five times back and forth on the surface of a paper board to be painted, in such a manner that a paint (acrylic emulsion, Nippon Paint's HI-Vinylex 80, mat paint) could be brought into contact with the board surface by the use of the roller brush. The condition of the roller brush fully containing the paint with no dripping was visually confirmed, and the paper board was thus painted by the use of the roller brush. The finished appearance of the coated face was visually evaluated in three ranks as follows :

A: The coated face was smooth and beautiful.
B: The coated face was smooth but contained some bubbles .
C: The coated face was smooth but had roller marks.

Example 1:

(1) Production of Chenille yarns:

1) Polyethylene terephthalate (having an intrinsic viscosity, measured in a mixed solvent (1/1 by mass) of phenol/tetrachloroethane at 30°C, of 0. 68) containing silica particles was used as the high-melting-point polymer component A to be a core. Ethylene-vinyl alcohol copolymer having an ethylene content of 40 mol% and a melt index of 10 was used as the low-melting-point polymer component B to be a sheath. These were spun and drawn into core/sheath conjugate filament fibers of 167 dtex/48 filaments. The core/sheath conjugate filament fibers were false-twisted to a count of 2570 T/M. The first-stage heater temperature was 120°C and the second-stage heater temperature was 135°C. The process gave a false-twisted yarn and its crimp elongation was 17 %. This was used as the core yarn for chenille yarns.

2) Effect yarns for chenille yarns were prepared as follows: 6-Nylon (A) and the above-mentioned ethylene-vinyl alcohol copolymer (B) were spun in a ratio by mass of 1:2 into 11-split conjugate fibers. The cross section of the fiber is as in Fig. 1C. The fibers were drawn to obtain oriented yarns of 111 dtex/24 filaments. The yarns were false-twisted to a count of 2350 T/M. The first-stage heater temperature was 120°C and the second-stage heater temperature was 135°C. The process gave conjugate fibers that were partly split in the machine direction.

3) The core yarns and the effect yarns were fed into a chenille-forming machine to produce chenille yarns. Thus produced, the chenille yarns had a fineness of 1510 dtex and a linear density of 11 yarns/cm, and the height of the effect yarn from the base of the core yarn of the chenille yarns was 3 mm. The linear density was controlled on the basis of the condition in producing the chenille yarns.

(2) Production of Circular Material:

Using a lily yarn knitting machine with 61 needles (2-inch, 10-gauge), the chenille yarns were knitted into a circular fabric. The length of one-round stitches of the thus-knitted circular fabric was 320 mm.

(3) Fabrication of Roller Brush:

The circular fabric obtained in the above was turned inside out so that the sinker loops could be on the service face. This was covered over a cylindrical nylon core (length $\times$ outer diameter = 18 cm$\times$2.5 cm), and the two edges thereof were suitably processed. Then, this was kept in contact with a hot plate heated at 184°C for 20 seconds to form an outermost skin layer. Then, a handle was fitted to it to complete a roller brush for painting.

Example 2:

Chenille yarns and a circular fabric were produced in the same manner as in Example 1. The circular fabric was turned inside out so that the sinker loops could be on the service face. This was covered over a cylindrical nylon core (length $\times$ outer diameter = 18 cm $\times$ 2.5 cm), and the two edges thereof were suitably processed. Not using a hot plate, this was heated at 170°C for 1 minute while kept free, and then dewatered and dried. After the circular fabric was thus fixed to the core, a handle was fitted to it to complete a roller brush for painting.

Comparative Example 1:

In the same process as in Example 1, a roller brush for painting was fabricated with no heat treatment. This was directly used as such.

Comparative Example 2:

In the process of Example 1, the split conjugate fibers of 111 dtex/24 filaments used for the effect yarns for the chenille yarns were formed into a cut velour fabric having a pile height of 5 mm, using a sinker pile knitting machine (30-inch, 16-gauge). This was cut into strips having a predetermined size, and spirally wound around a roller core in an ordinary manner to fabricate a roller brush for painting. Its size is the same as that of the roller brush fabricated in Example 1. Next, this was kept in contact with a hot plate heated at 184°C for 20 seconds to form an outermost skin layer. Then, a handle was fitted to it to complete a roller brush for painting.

Comparative Example 3:

A roller brush was fabricated in the same manner as in Example 1, except that 11-split conjugated fibers (165 dtex/48 filaments) of 6-nylon/polyethylene terephthalate (1:2 by mass) having a cross-section structure as in Fig. 1C were used for the effect yarns for the chenille yarns.

The performance evaluation results of the paint rollers obtained in the above are given in Table 1.

Table 1

| | Low-Melting-Point Polymer Component B in Thermal-Fusing Conjugate Fibers | Yarns on Service Face of Brush | Heat Treatment Condition | Skin Layer | Thickness of Skin Layer | Water Retention (times that of dry sample) | Finished Appearance of Coated Face* |
|---|---|---|---|---|---|---|---|
| Example 1 | ethylene-vinyl alcohol copolymer | Chenille yarns | contacted with hot plate 184°C×20 sec | yes | 120 μm | 4.9 | A |
| Example 2 | " | Chenille yarns | no hot plate 170°C×60 sec | no | - | 4.2 | A |
| Comp. Ex. 1 | " | Chenille yarns | no heat treatment | no | - | 2.4 | C |
| Comp. Ex. 2 | " | cut pile yarns | contacted with hot plate 184°C×20 sec | yes | 170 μm | 5.7 | B |
| Comp. Ex. 3 | 6-nylon | Chenille yarns | no hot plate 170°C×60 sec | no | - | 2.0 | C |

Finished appearance of coated face (visual evaluation):

A: The coated face was smooth and beautiful.

B: The coated face was smooth but contained some bubbles.

C: The coated face was smooth but had roller marks.

As in Table 1, the roller brushes for painting of Example 1 and Example 2, inwhich the low-melting-point polymer component B in the thermal-fusing conjugate fibers is ethylene-vinyl alcohol polymer and the conjugate fibers were used in producing the chenille yarns that constitute the service face of the brush, are better than those of Comparative Examples 1 to 3. Specifically, the roller brushes of Examples 1 and 2 gave no bubbles in the painted faces, and the faces painted by the use of them were finished beautifully. In addition, they are free from the problem to be caused by the seams of ordinary seamed roller brushes.

As described in detail hereinabove with reference to its preferred embodiments, the invention provides a seamless roller brush for painting and solves the problem heretofore caused by seaming failure in producing conventional seamed roller brushes for painting, and the surface of the roller brush of the invention is smooth and flat. In addition, the object face painted by the use of the roller brush of the invention has no bubbles in the paint layer and is beautiful and its quality is high. Moreover, the method for producing it is simplified, and the roller brush can be produced at low costs.

**Claims**

1. A roller brush for painting which is fabricated by covering a roll core with a paint holder of a fibrous circular material that contains thermal-fusing conjugate fibers comprising a high-melting-point polymer component A and a low-melting-point polymer component B, and in which at least a part of the thermal-fusing conjugate fibers to constitute the fibrous circular material are fused to form a porous structure.

2. The roller brush for painting as claimed in claim 1, wherein a network-structured skin layer formed through thermal fusion of the low-melting-point polymer component of the thermal-fusing conjugate fibers is in the outermost surface of the fibrous circular material.

3. The roller brush for painting as claimed in claim 1 or 2, wherein at least one component of the low-melting-point polymer component B to form the fibers is an ethylene-vinyl alcohol copolymer.

4. The roller brush for painting as claimed in any one of claims 1 to 3, wherein the water retention of the fibrous circular material is at least 3 times the mass of the fibrous circular material.

5. A method for producing a roller brush for painting, which comprises preparing chenille yarns to contain thermal-fusing conjugate fibers and have effect yarns having a height of at least 1.5 mm from the core yarns thereof, knitting them into a circular knitted fabric of which the periphery is longer than the body periphery of a roll core for the roller brush, covering the roll core with the knitted fabric, then processing it under dry heat or wet heat to thereby shrink the thermal-fusing conjugate fibers and partly fuse the fibers with an adhesive component so that the knitted fabric is tightly fixed around the roll core.

Fig. 1:

(a)

High-Melting-Point Polymer A

Low-Melting-Point Polymer B

(b)

High-Melting-Point Polymer A

Low-Melting-Point Polymer B

(c)

High-Melting-Point Polymer A          Low-Melting-Point Polymer B

Fig. 2:

Fig. 3:

Fig. 4:

Fig. 5:

Fig. 6:

Fig. 7:

Fig. 8:

11    6

Fig. 10:

7    7

7

50um

Fig. 9:

The top face
of the roller